# EUROPEAN PATENT APPLICATION

(11) **EP 3 834 605 A2**
(43) Date of publication of application: **16.06.2021**
(21) Application number: 19847427.2
(22) Date of filing: 08.08.2019
(51) Int. Cl.: A01G 7/04, A01G 7/06, A01G 22/40, A01G 31/02

(54) **PLANT CULTIVATION APPARATUS, AND CULTIVATION METHOD USING SAME**

(30) Priority: 09.08.2018 US 201862716457 P
(71) Applicant: Seoul Viosys Co., Ltd, Ansan-si, Gyeonggi-do 15429 (KR)
(72) Inventor: KO, Sang Min, Ansan-si Gyeonggi-do 15429 (KR)
(74) Representative: Stolmár & Partner Patentanwälte PartG mbB
(86) International application number: PCT/KR2019/009933
(87) International publication number: WO 2020/032601

(57) **Abstract**

Disclosed herein is a plant cultivation apparatus for increasing the content of phytochemicals in a plant by applying light to the plant. The plant cultivation apparatus is adapted to apply the light to the plant immediately before harvest of the plant, wherein the light has a wavelength of about 200 nm to about 400 nm and the plant is irradiated with the light at an irradiance of about 1 µW/cm² to about 500 µW/cm² for about 1 hour to about 30 hours, whereby at least one of the total phenolic content and antioxidant capacity of the plant is increased.

## Description

### [Technical Field]

Embodiments of the present disclosure relate to a plant cultivation apparatus and a cultivation method using the same.

### [Background Art]

Recently, with increasing interest in health, there is increasing demand for safe foods including organic foods. General consumers usually buy organic foods at a grocery store or market, while, recently, there are consumers who want to eat self-produced organic food. In particular, since vegetables are relatively easy for anyone to grow, there is great demand for a plant cultivation apparatus suitable for cultivating vegetables.

Interest in health is strongly expressed in terms of anti-aging. In recent years, people have been more interested in natural anti-aging methods such as ingestion of antioxidants present in food than artificial anti-aging methods such as medical procedures and prescriptions. Free oxygen radicals are known to cause destruction of human tissue and cells and promote aging of the entire body tissue including skin. Antioxidants scavenge free oxygen radicals, thereby delaying aging of the body. Examples of substances having high antioxidant capacity include vitamins, phenolic substances, and carotenoids. In particular, phenolic substances are broadly distributed in the plant world and have high antioxidant capacity and an ability to block UV light, which promotes skin aging. Plants known to have high antioxidant capacity include beans, berries, and vegetables. In order to meet the demand for safe and healthy food, it is necessary to develop a method of increasing the total phenolic content of plants that are easy to grow at home.

### [Disclosure]

### [Technical Problem]

Embodiments of the present disclosure are aimed at providing plants having high antioxidant capacity or high total phenolic content.

### [Technical Solution]

In accordance with one aspect of the present disclosure, there is provided a plant cultivation apparatus. The plant cultivation apparatus applies light to a plant immediately before harvest of the plant. Here, the light has a wavelength of about 200 nm to about 400 nm and the plant is irradiated with the light at an irradiance of about 1 µW/cm² to about 500 µW/cm² for about 1 hour to about 30 hours, whereby at least one of the total phenolic content and antioxidant capacity of the plant is increased.

In one embodiment, the plant cultivation apparatus may supply water to seeds of the plant under dark conditions for a first period of time and may irradiate the plants grown from the seeds with the light for a second period of time immediately before harvest.

In one embodiment, the second period of time may be shorter than the first period of time.

In one embodiment, the plant cultivation apparatus may include: a light source emitting the light; and a main body in which the plant is placed, the main body including a water supply device supplying water to the seeds and the plant.

In accordance with another aspect of the present disclosure, there is provided a plant cultivation method for increasing the content of phytochemicals in a plant by applying light to the plant, the plant cultivation method including applying the light to the plant immediately before harvest of the plant, wherein the light has a wavelength of about 200 nm to about 400 nm and the plant is irradiated with the light at an irradiance of about 1 µW/cm² to about 500 µW/cm² for about 1 hour to about 30 hours, whereby at least one of the total phenolic content and antioxidant capacity of the plant is increased.

In one embodiment, the plant cultivation method may further include: germinating and growing seeds of the plant; irradiating the plants grown from the seeds with the light immediately before harvest of the plant; and harvesting the plants grown from the seeds.

In one embodiment, the light may include light having a wavelength of about 270 nm to about 315 nm.

In one embodiment, the plant may be irradiated with the light for about 6 hours to about 48 hours.

In one embodiment, the seeds may be mung bean seeds or soybean seeds.

In one embodiment, the seeds and the plant may be grown in an environment with visible light excluded therefrom.

In one embodiment, the plant may be irradiated with the light at an irradiance of about 5 µW/cm² to about 15 µW/cm².

In one embodiment, the antioxidant capacity may be the antioxidant capacity of antioxidants including phenolic compounds, vitamins, and carotenoids.

In one embodiment, the phenolic compounds may include flavonoids, phenolic acids, polyphenols, stilbenoids, hydrocinnamic acids, and coumaric acids.

### [Advantageous Effects]

Embodiments of the present disclosure provide a plant that has high marketability while having high total phenolic content and antioxidant capacity.

In particular, according to the embodiments of the present disclosure, a plants grown from seeds can be prevented from turning green, thereby preventing reduction in marketability of the cultivated plant.

### [Description of Drawings]

FIG. 1 is a sectional view of a plant cultivation apparatus according to one embodiment of the present disclosure.
FIG. 2 is a schematic view of a light emitting diode according to one embodiment of the present disclosure.
FIG. 3A is a flowchart of a plant cultivation method according to one embodiment of the present disclosure.
FIG. 3B is a flowchart of a plant cultivation method according to another embodiment of the present disclosure.
FIG. 4A and FIG. 4B are graphs showing the total phenolic content of plants cultivated in Examples and Comparative Examples.
FIG. 5A and FIG. 5B are graphs showing the antioxidant capacity of plants cultivated in Examples and Comparative Examples.
FIG. 6 is a graph showing the dry weight of plants cultivated according to Comparative Examples and Examples.
FIG. 7A and FIG. 7B are graphs comparing the total phenolic content of plants cultivated in Examples and Comparative Examples.
FIG. 8A and FIG. 8B are graphs showing the antioxidant capacity of plants cultivated in Examples and Comparative Examples.
FIG. 9 is a graph showing the dry weight of plants cultivated in Examples and Comparative Examples.
FIG. 10A to FIG. 10C are images of plants cultivated in Examples and Comparative Examples.
FIG. 11A to FIG. 11C are images of plants cultivated in Examples and Comparative Examples.
FIG. 12A to FIG. 12D show changes in color of soybean sprouts depending upon the wavelength of light to which the soybean sprouts are exposed.

### [Best Mode]

The present disclosure may be realized by various embodiments, and some exemplary embodiments of the present disclosure will be described in detail with reference to the accompanying drawings. However, it should be understood that the present disclosure is not limited to the following embodiments, and that various modifications, substitutions, and equivalent embodiments can be made by those skilled in the art without departing from the spirit and scope of the present disclosure.

Like components will be denoted by like reference numerals throughout the specification. It should be noted that the drawings may be exaggerated in thickness of lines or size of components for descriptive convenience and clarity only. It will be understood that, although the terms "first", "second", "A", "B", and the like may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a "first" element or component discussed below could also be termed a "second" element or component, or vice versa, without departing from the scope of the present disclosure. As used herein, the singular forms "a" and "an" are intended to include the plural forms as well, unless the context clearly indicates otherwise.

It will be understood that the terms "includes", "comprises", "including" and/or "comprising," when used in this specification, specify the presence of stated features, steps, operations, elements, and/or components, but do not preclude the presence or addition of one or more other features, steps, operations, elements, components, and/or groups. In addition, when a layer, film, region, or panel is referred to as being "on" another layer, film, region, or panel, it may be directly on the other layer, film, region, or panel, or intervening layers, films, regions, or panels may be present. In addition, when a layer, film, region, or panel is referred to as being "formed on" another layer, film, region, or panel, it may be formed on an upper, lower, or side surface of the other layer, film, region, or panel. Further, when a layer, film, region, or panel is referred to as being "under" another layer, film, region, or panel, it may be directly under the other layer, film, region, or panel, or intervening layers, films, regions, or panels may be present.

Hereinafter, exemplary embodiments of the present disclosure will be described in detail with reference to the accompanying drawings.

A plant cultivation method according to one embodiment of the present disclosure can produce a plant which has high total phenolic content and high antioxidant capacity.

Specifically, in the plant cultivation method according to this embodiment of the present disclosure, seeds of a plant are grown under dark conditions for a first period of time, followed by irradiating the seeds or the plants grown from the seeds with light having a wavelength of about 200 nm to about 400 nm for a second period of time immediately before harvest, thereby considerably increasing the antioxidant capacity and total phenolic content of the plant. Now, a plant cultivation apparatus that may be used to grow a plant by the plant cultivation method according to the embodiment of the present disclosure will be described.

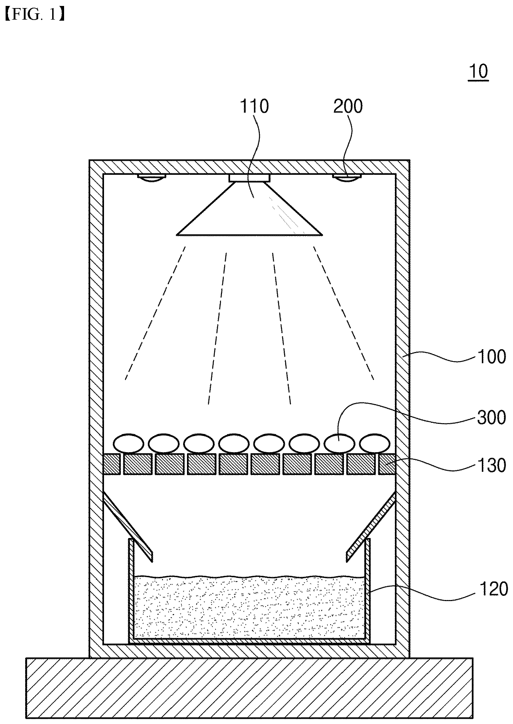

FIG. 1 is a sectional view of a plant cultivation apparatus according to one embodiment of the present disclosure.

Referring to FIG. 1, a plant cultivation apparatus 10 according to one embodiment of the present disclosure includes: a main body 100 in which seeds 300 are placed; and a light source 200.

The main body 100 includes an empty space in which the seeds 300 are placed, and may be provided in the form of a box that can block out external light.

The main body 100 provides an environment for growth of the seeds 300 placed therein. The main body 100 may be sized to allow multiple seeds 300 to be placed and grown therein. The size of the main body 100 may vary depending upon application of the plant cultivation apparatus 10. For example, when the plant cultivation apparatus 10 is used for small-scale home cultivation, the main body 100 may have a relatively small size. When the plant cultivation apparatus 10 is used for large-scale commercial cultivation, the main body 100 may have a relatively large size.

The main body 100 may block external light from entering the main body 100. Thus, the may body may provide a dark environment isolated from the outside world. In this way, it is possible to prevent external light from striking the seeds 300 placed inside the main body 100. In particular, the main body 100 can prevent external visible light from striking the seeds 300.

The main body 100 may have an inner surface coated with a photocatalyst. The photocatalyst induces photocatalytic reaction by receiving light emitted from the light source 200. In this way, it is possible to prevent proliferation of bacteria or fungi in a wet, dark environment inside the main body 100. To this end, the photocatalyst may include at least one selected from the group of titanium dioxide (TiO₂), zirconia (ZrO₂), zinc oxide (ZnO), tungsten oxide (WO₃), zinc oxide (ZnO), and tin oxide (SnO₂).

The main body 100 may include a water supply device and a cultivation table 130.

The water supply device is a member for supplying water to the seeds 300 placed in the main body 100 and the plants grown from the seeds 300. The water supply device may include a water supply unit 110 and a water discharge unit 120.

The water supply unit 110 supplies water to the seeds 300 and the plants grown from the seeds 300, and the water discharge unit 120 receives remaining water (not absorbed by the seeds and the plant) and discharges the remaining water from the main body 100.

The water supply unit 110 may be provided in the form of a shower head disposed at a top of the main body 100 to spray water onto the seeds 300 and the plants grown from the seeds 300. However, it will be understood that the present disclosure is not limited thereto and the water supply unit 110 may be provided in various forms by those skilled in the art depending upon the types of seeds 300 cultivated and the shape of the main body 100. For example, the water supply unit 110 may be provided in the form of a rotary sprinkler, a mist spray nozzle, a mist generator, or the like.

The water supply device may be provided with one or multiple water supply units 110. The number of water supply units 110 may vary depending upon the size of the main body 100. For a relatively small household plant cultivation apparatus 10, one water supply unit may be provided since the main body 100 is relatively small. In contrast, for a relatively large commercial plant cultivation apparatus 10, several water supply units 110 may be provided since the main body 100 is relatively large.

The water supply unit 110 may be connected to a water tank inside the main body 100 or a water supply outside the main body 100. The water supply unit 110 may further include a filter filtering out pollutants from water to be supplied to the seeds 300 and the plants grown from the seeds 300. The filter may include, for example, an activated carbon filter and a non-woven fabric filter. Thus, water having passed through the filter can be free from impurities. The filter may further include a lamp-type filter, as needed. The lamp-type filter irradiates water with UV light or the like to remove germs, bacteria, mold spores, and the like from the water. With these filters of the water supply unit 110, the plant cultivation apparatus according to the present disclosure can prevent contamination of the seeds 300 and the plants grown from the seeds 300 inside the main body 100 even when water discharged through the water discharge unit 120 is recycled or when rainwater is directly used for cultivation.

The water supply unit 110 may include a timer. With the timer, the water supply unit 110 can supply water to the seeds 300 and the plants grown from the seeds 300 at predetermined intervals without user intervention. The predetermined intervals may be set to vary depending upon the types of seeds 300 cultivated. For a plant that needs a lot of water for growth, the water supply unit 110 can supply water at relatively short intervals and, for a plant that needs less water for growth, the water supply unit 110 can supply water at relatively long intervals.

As described above, the water discharge unit 120 discharges a remaining portion of water supplied from the water supply unit 110, which has not been absorbed by the seeds 300 and the plants grown from the seeds 300, from the main body 100. The water discharge unit 120 may be, for example, a container including a funnel-shaped member. The remaining portion of water supplied from the water supply unit 110 is collected in the container through the funnel-shaped member. When the container, that is, the water discharge unit 120, is filled up, a user may separate the water discharge unit 120 from the main body 100 to empty the water discharge unit 120. However, it will be understood that the present disclosure is not limited thereto and water collected in the water discharge unit 120 may be automatically discharged from the main body 100 without user intervention. For example, the water discharge unit 120 may be provided in the form of a pipe connected to a bottom of the main body 100 to discharge water on the bottom of the main body 100 from the main body 100.

Water collected in the water discharge unit 120 may be supplied back to the water supply unit 110, as needed. Water collected in the water discharge unit 120 is free from foreign substances since the water has been filtered and purified through the water supply unit 110 before supply to the seeds 300 and the plants grown from the seeds 300. Thus, even when water collected in the water discharge unit 120 is recycled, there is no concern of contamination of the seeds 300 and the plants grown from the seeds 300 with the water.

The water discharge unit 120 may further include a sterilizer. The sterilizer sterilizes water collected in the water discharge unit 120. The sterilizer may irradiate water collected in the water discharge unit 120 with light including UV light. Thus, even when water is stagnant in the water discharge unit 120, there is no concern of proliferation of bacteria, molds, and the like in the stagnant water. In addition, the sterilizer may have a waterproof structure to avoid failure due to water collected in the water discharge unit 120.

The cultivation table 130 supports the seeds 300 and the plants grown from the seeds 300. To this end, the cultivation table 130 may be provided in the form of a slate. The cultivation table 130 may have the same size as the cross-section of the main body 100 and may have a shape corresponding to the cross-sectional shape of the main body 100.

The cultivation table 130 is adapted to grow the seeds 300 thereon. The cultivation table 130 may be fitted on an inner wall of the main body 100. Location of the cultivation table 130 in the main body 100 may vary depending upon the types of seeds 300 cultivated. For example, for a seed 300 of a relatively tall plant, the cultivation table 130 may be disposed relatively close to the bottom of the main body 100. On the other hand, for a seed 300 of a relatively short plant, the cultivation table may be disposed relatively close to the top of the main body 100.

The cultivation table 130 may be a porous slate. Thus, a remaining portion of water sprayed onto the cultivation table 130, which has not been absorbed by the seeds 400 and the plants grown from the seeds 300, can flow out through pores in the cultivation table 130. In this way, even when water continues to be sprayed onto the cultivation table 130, there is no concern that water will rise over the cultivation table 130, causing the seeds 300 to sink under water. The pores in the cultivation table 130 may have a smaller size than the seeds 300. In this way, it is possible to prevent the seeds 300 from flowing out through the pores in the cultivation table 130.

One surface of the cultivation table 130, particularly, a surface on which the seeds 300 are placed, may be formed of a hygroscopic material. In this way, at least some portion of water sprayed onto the cultivation table 130 can remain on the surface of the cultivation table 130 which contacts the seeds 300. Accordingly, the seeds 300 can remain moist without continuous water supply, whereby growth of the seeds 300 can be promoted.

Although not shown in the drawings, the main body 100 may further include an oxygen generator or a gas exchange device therein. In this way, oxygen required for growth of the seeds 300 can be supplied without interruption even when the interior of the main body 100, in which the seeds 300 and the plants grown from the seeds 300 are placed, is sealed.

The main body 100 may further include a harvesting device. The harvesting device isolates the seeds 300 and the plants grown from the seeds from water after completion of growth of the seeds 300, thereby preventing the plants from growing to a size larger than a target size.

The light source 200 emits light toward the plants grown from the seeds 300.

The light emitted from the light source 200 may include light having a wavelength of about 200 nm to about 400 nm. In one embodiment, the light emitted from the light source 200 may be light having a wavelength of about 250 nm to about 350 nm, light having a wavelength of about 270 nm to about 315 nm, or light having a wavelength of 295 nm.

In one embodiment, the light emitted from the light source 200 may include light having a wavelength of about 275 nm and light having a wavelength of about 295 nm.

The light emitted from the light source 200 may be applied to the plant for a predetermined period of time required for production of a specific phytochemical in the plant. For example, the plant may be irradiated with the light for about 1 to 48 hours, for about 6 to 48 hours, for about 1 to 30 hours, or for about 24 hours. In addition, the light emitted from the light source 200 may be applied to the plant at a predetermined irradiance for production of a specific phytochemical in the plant. For example, the plant may be irradiated with the light at an irradiance of about 1 µW/cm² to 500 µW/cm², about 5 µW/cm² to 100 µW/cm², or about 10 µW/cm².

Irradiation of the plants grown from the seeds 300 with the light having a wavelength within the above range can increase the antioxidant capacity and total phenolic content of the plant. In particular, irradiation of the plants grown from the seeds 300 with the light having a wavelength within the above range can increase the antioxidant capacity and total phenolic content of the plants without affecting growth of the plants.

The light source 200 may include a light emitting diode. The light source 200 may include multiple light sources 200, which may each include multiple light emitting diodes. Here, the multiple light emitting diodes may emit light having different wavelengths. For example, some light sources 200 or light emitting diodes may emit light having a wavelength of about 275 nm, and the other light sources 200 or light emitting diodes may emit light having a wavelength of about 295 nm.

In the embodiment in which the light source 200 emits light in various wavelength bands, the light source 200 may not emit light in the visible spectrum. The reason for this is that irradiation with light in the visible spectrum can promote production of chlorophyll in the seeds 300 and the plants grown from the seeds 300. Since the light source 200 does not emit light in the visible spectrum and the main body 100 blocks out external light, the seeds 300 can be grown in an environment with visible light excluded therefrom. In this way, it is possible to prevent production of chlorophyll during growth of the seeds 300.

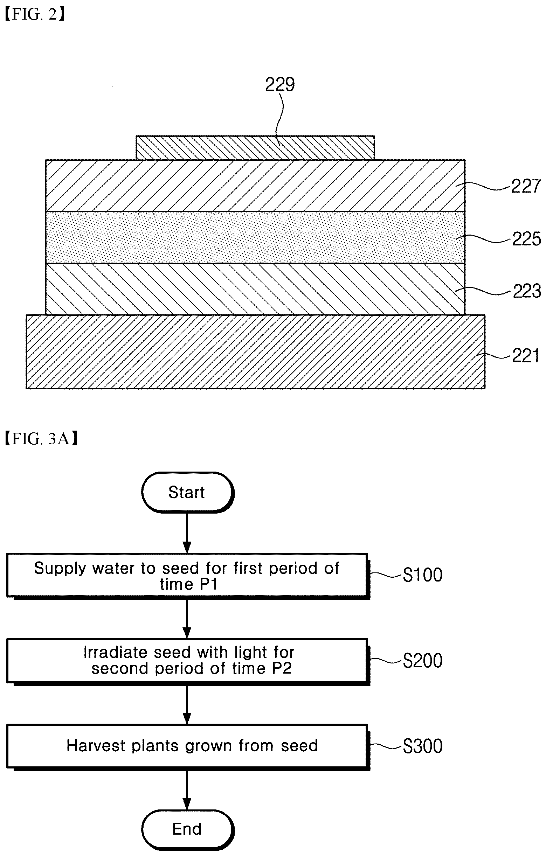

FIG. 2 is a schematic view of a light emitting diode according to one embodiment of the present disclosure.

Referring to FIG. 2, a light emitting diode according to this embodiment may include: a light-emitting structure including a first semiconductor layer 223, an active layer 225, and a second semiconductor layer 227; and a first electrode 221 and a second electrode 229 connected to the light emitting structure.

The first semiconductor layer 223 is a semiconductor layer doped with a first conductive dopant. The first conductive dopant may be a p-type dopant. The first conductive dopant may be Mg, Zn, Ca, Sr, Ba, or the like. In one embodiment, the first semiconductor layer 223 may be formed of a nitride semiconductor. In one embodiment, the first semiconductor layer 223 may be formed of a material including GaN, AlN, AlGaN, InGaN, InN, InAlGaN, AlInN, and the like.

The active layer 225 is disposed on the first semiconductor layer 223 and corresponds to a light-emitting layer. The active layer 225 is a layer in which electrons (or holes) injected through the first semiconductor layer 223 recombine with holes (or electrons) injected through the second semiconductor layer 227 to emit light due to a bandgap difference between energy bands of a material forming the active layer 225.

The active layer 225 may be implemented by a compound semiconductor. For example, the active layer 225 may be implemented by at least one selected from among group III-V compound semiconductors and group II-VI compound semiconductors.

The second semiconductor layer 227 is disposed on the active layer 225. The second semiconductor layer 227 is a semiconductor layer doped with a second conductive dopant having an opposite polarity to the first conductive dopant. The second conductive dopant may be an n-type dopant. For example, the second conductive dopant may include Si, Ge, Se, Te, O, C, and the like.

In one embodiment, the second semiconductor layer 227 may formed of a nitride semiconductor. For example, the second semiconductor layer 227 may be formed of a material including GaN, AlN, AlGaN, InGaN, InN, InAlGaN, AlInN, and the like.

The first electrode 221 and the second electrode 229 may be provided in various forms to be connected to the first semiconductor layer 223 and the second semiconductor layer 227. Although the first electrode 221 and the second electrode 229 are disposed on a lower surface of the first semiconductor layer 223 and an upper surface of the second electrode 229, respectively, in this embodiment, it should be understood that the present disclosure is not limited thereto. In one embodiment, the first electrode 221 and the second electrode 229 may be formed of, for example, various metals, such as Al, Ti, Cr, Ni, Au, Ag, Ti, Sn, Ni, Cr, W, and, Cu, or alloys thereof. The first electrode 221 and the second electrode 229 may have a monolayer structure or a multilayer structure.

Although the light emitting diode is described as being a vertical light emitting diode, it will be understood that the light emitting diode does not necessarily have to be a vertical light emitting diode and may include various types of light emitting diodes without departing from the spirit of the present disclosure.

As in the embodiment, use of the light emitting diode used as the light source applying light to the plant instead of typical lamps provides the following effects.

Unlike typical lamps (for example, UV lamps), the light emitting diode can supply the plant with light having a specific wavelength when used as the light source according to the embodiment of the present disclosure. Light emitted from typical lamps has a broader spectrum than light emitted from the light emitting diode. Thus, it is difficult to separate a light component in a specific wavelength band from light emitted from typical lamps. In contrast, light emitted from the light emitting diode has a spectrum with a sharp peak at a specific wavelength, and thus the light emitting diode can provide a specific wavelength of light with a much narrower full width at half maximum than light emitted from typical lamps. Accordingly, the light emitting diode can be advantageously used to selectively provide only light having a specific wavelength to the plant.

In addition, typical lamps have difficulty in irradiating the plant at a clearly defined irradiance, whereas the light emitting diode can irradiate the plant at a clearly defined irradiance. Further, since typical lamps have difficulty in irradiating the plant at a clearly defined irradiance, it is necessary to set a broad irradiation time range. In contrast, the light emitting diode can provide light required for the plant within a relatively short and clearly defined time frame.

As described above, typical lamps have difficulty in delivering an accurate dose of radiation to the plant due to a relatively broad wavelength band, a relatively broad irradiance range, and a relatively broad irradiation time range thereof. In contrast, the light emitting diode can deliver an accurate dose of radiation due to a relatively narrow wavelength band, a relatively narrow irradiance range, and a relatively narrow irradiation time range thereof.

In addition, typical lamps take a considerable amount of time to reach a maximum irradiance thereof after being powered on. In contrast, the light emitting diode requires little or no warm-up time and can reach a maximum irradiance thereof immediately after being powered on. Thus, the light emitting diode allows precise control over irradiation time upon supplying the plant with light having a specific wavelength.

The light source 200 may have a waterproof structure. In this way, even when water splashes on the light source 200, there is no concern of failure of the light source 200.

The seeds 300 are placed inside the main body 100 and are grown in the main body 100 by receiving water. The seeds 300 may be of a type suitable for hydroponics. Accordingly, the seeds 300 can be grown on the cultivation plate 130 without any soil. For example, the seeds 300 may be mung bean seeds or soybean seeds and thus the plants grown from the seeds 300 may be mung bean sprouts or soybean sprouts.

The seeds 300 may be grown in an environment with visible light excluded therefrom in the main body 100. Accordingly, the plant cultivated from the seeds 300 may contain substantially no chlorophyll. For example, when the seeds 300 are mung bean seeds or soybean seeds, mung bean sprouts or soybean sprouts grown from the seeds 300 may contain substantially no chlorophyll and thus may be yellow.

The plants grown from the seeds 300 receive light from the light source 200. The light from the light source 200 increases the antioxidant capacity and total phenolic content of the plants grown from the seeds 300. Specifically, the light from the light source 200 has a wavelength of about 200 nm to about 400 nm, which can activate biosynthesis of secondary metabolites in the plants grown from the seeds 300, thus increasing the antioxidant capacity and total phenolic content of the plants.

The light having a wavelength of about 200 nm to about 400 nm induces mechanisms such as damage to DNA in cells of the plant and generation of free oxygen radicals, causing severe damage to tissue and cells of the plant. In order to protect tissue cells, the plant produces secondary metabolites capable of absorbing the light or scavenging free oxygen radicals.

For example, when the light is applied to the plants grown from the germinated seeds 300, an enzyme involved in biosynthesis of secondary metabolites having the aforementioned capacities, such as phenylalanine ammonia-lyase, becomes active. As a result, biosynthesis of phenolic compounds is promoted, resulting in improvement in antioxidant capacity of the plant and reduction in damage to tissue due to the light.

Antioxidants contained in the plant grown by the method set forth above may include phenolic compounds, vitamins, carotenoids, and the like. The phenolic compounds may include flavonoids, phenolic acids, polyphenols, stilbenoids, hydrocinnamic acids, and coumaric acids. Flavonoids contained in the plants grown from the seeds 300 may include, for example, flavonol, flavone, isoflavone, flavanone, flavanonol, flavan, anthocyanin, apigenin-7-monoglucoside, and the like.

According to the embodiments, the antioxidant capacity and total phenolic content of the plants grown from the seeds 300 can be increased by growing the seeds 300 using light having a wavelength of about 200 nm to about 400 nm. In addition, since the seeds 300 are not exposed to visible light during growth thereof, it is possible to prevent the plant from having a green color due to chlorophyll produced during growth of the seeds 300. Accordingly, it is possible to produce a plant that has a yellow color, which stimulates appetite, while having high antioxidant capacity and high total phenolic content.

### [Mode for Invention]

Next, a method for producing a plant having the aforementioned advantages will be described in more detail.

FIG. 3A is a flowchart of a plant cultivation method according to one embodiment of the present disclosure.

Referring to FIG. 3A, the seeds are placed in the main body, followed by supplying water to the seeds for a first period of time P1 (S100). For the first period of time P1, the seeds may be grown under dark conditions while being supplied with water. Water does not necessarily have to be supplied to the seeds without interruption for the first period of time P1. Water may be supplied to the seeds at regular intervals for the first period of time P1.

Then, the seeds are irradiated with light for a second period of time P2 (S200). Water may also be supplied to the seeds for the second period of time P2. Accordingly, the seeds may be supplied with light and water at the same time for the second period of time P2. The light supplied for the second period of time P2 may have a wavelength of about 200 nm to about 400 nm.

The second period of time P2 may be shorter than the first period of time P1. That is, the period of time for which the seeds are irradiated with light may be shorter than the period of time for which the seeds are not irradiated with light. For example, when the seeds are mung bean seeds or soybean seeds, the first period of time P1, for which the seeds are not irradiated with light, may range from about 48 hours to about 72 hours, whereas, the second period of time P2, for which the seeds are irradiated with light, may range from about 6 hours to about 48 hours.

In addition, the second period of time P2 may be given immediately before harvest of the plants grown from the seeds. Thus, the plants may receive light for the second period of time P2 until the time of harvest of the plants, whereby biosynthesis of secondary metabolites in the plants can be promoted, thereby allowing increase in antioxidant capacity and total phenolic content of the plants.

For the second period of time P2, the light source may irradiate the seeds or the plants at an irradiance of about 5 µW/cm² to 15 µW/cm². Within this range of irradiance, the antioxidant capacity and total phenolic content of the plants can be increased without damage/deformation to cells of the plants. If the seeds or the plants are irradiated at an irradiance of less than about 5 µW/cm², insignificant stress is applied to cells of the plants, causing insufficient production of antioxidants. On the contrary, if the seeds or the plants are irradiated at an irradiance exceeding about 15 µW/cm², cells of the plants can be damaged/deformed.

The light emitted from the light source for the second period of time P2 does not necessarily have the same intensity at all wavelengths. Depending on the types of seeds cultivated, the light having a wavelength of about 200 nm to about 400 nm may have relatively high intensity at a specific wavelength. For example, when the seeds are mung bean seeds, the light having a wavelength of about 200 nm to about 400 nm may have relatively high intensity at a wavelength of 295 nm. In this way, light irradiation specific to the types of seeds cultivated can be achieved, thereby maximizing the antioxidant capacity and total phenolic content of the seeds or the plants grown from the seeds.

After completion of light irradiation and water supply for the second period of time P2, the plants grown from the seeds may be harvested (S300). Here, the harvesting device may be used. The harvesting device isolates the seeds and the plants from water after the first period of time P1 and the second period of time P2 have elapsed. Accordingly, it is possible to prevent the plants from growing to a size larger than a target size.

According to the embodiments, the antioxidant capacity and total phenolic content of the plants can be increased by irradiating the seeds with the light for the second period of time P2 immediately before harvest. In addition, since the second period of time P2 for which the seeds are irradiated with the light is shorter than the first period of time P1 for which the seeds are not irradiated with the light, it is possible to prevent damage to the plants due to excessive light irradiation.

Hereinabove, the plant cultivation method according to the embodiment of the present disclosure has been briefly described. According to another embodiment of the present disclosure, plants may be automatically cultivated without user intervention. Hereinafter, a method for cultivating plants without user intervention will be described in detail.

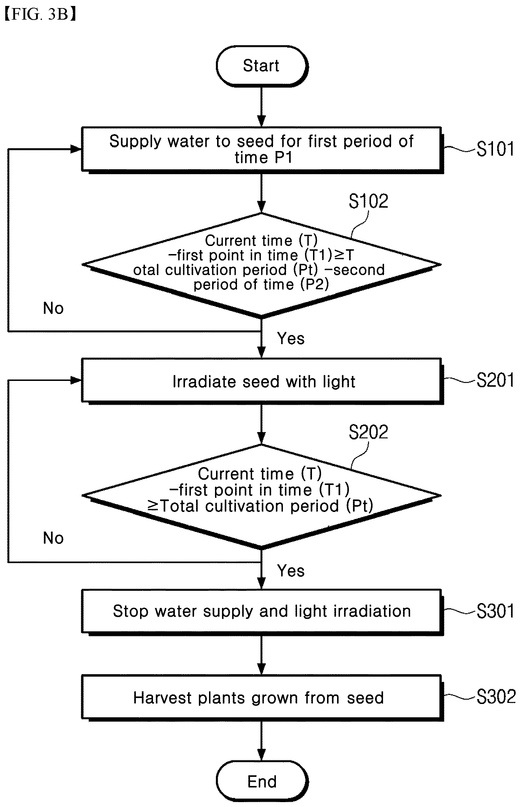

FIG. 3B is a flowchart of a plant cultivation method according to another embodiment of the present disclosure.

Referring to FIG. 3B, first, supply of water to the seeds is initiated from a first point in time T1 (S101). Here, the first point in time T1 may be a point in time at which a user performs an operation for initiating cultivation after placing the seeds in the plant cultivation apparatus according to the embodiment of the present disclosure. Here, the operation for initiating cultivation may be, for example, an act of powering on the plant cultivation apparatus and pressing a cultivation start button.

Then, the plant cultivation apparatus calculates a difference between current time T and the first point in time T1, that is, the period of time that has elapsed from the first point in time T1 to the present (S102). Then, the plant cultivation apparatus compares the period of time that has elapsed from the first point in time T1 to the present (T-T1), with a difference between a preset total cultivation period Pt and the preset second period of time P2 (Pt-P2). Since the second period of time P2 is a period of time for which the plants grown from the seeds are irradiated with light, as described above, the difference between the total cultivation period Pt and the second period of time P2 (Pt-P2) means a period of time for which the plants are cultivated without light irradiation, among the total cultivation period Pt.

Here, the total cultivation period Pt and the second period of time P2 may be set by a user prior to operating the plant cultivation apparatus. Accordingly, a user may set the total cultivation period Pt and the second period P2 based on user preference or the types of plants cultivated. Alternatively, the plant cultivation apparatus may store data on the optimal total cultivation period Pt and the optimal second period of time P2 for each type of plants or seeds so as to set the total cultivation period Pt and the second period of time P2 specifically for a plant or seed selected by a user.

If the period of time that has elapsed from the first point in time T1 to the current time T (T-T1) is greater than or equal to the difference between the total cultivation period Pt and the second period of time P2 (Pt-P2), the plant cultivation apparatus irradiates the plants grown from the seeds with the light (S201). On the contrary, if the period of time that has elapsed from the first time point T1 to the current time T (T-T1) is less than the difference between the total cultivation period Pt and the second period P2 (Pt-P2), the plant cultivation apparatus continues to supply only water based on determination that it is still too early to irradiate the plants grown from the seeds with the light.

The light radiated to the plants grown from seeds has a wavelength of about 200 nm to about 400 nm. Irradiation with the light can activate biosynthesis of secondary metabolites in the plants grown from the seeds, thereby increasing the antioxidant capacity and total phenolic content of the plants grown from the seeds. The antioxidant capacity and total phenolic content of the plants may be influenced by the wavelength and irradiance of the light and duration of exposure to the light, and may be increased under certain conditions. For example, a UVR8 receptor in a cell absorbs light in the UV spectrum to produce phytochemicals such as phenolic substances. HY5, which stimulates the UVR8 receptor, can be activated by light having a certain wavelength or less, for example, UVB light having a wavelength of 315 nm or less.

Then, the plant cultivation apparatus compares the difference between the current time T and the first point in time T1 (T-T1), that is, the period of time that has elapsed from the first point in time T1 to the present T, with the total cultivation period Pt (S202). If the period of time that has elapsed from the first time point T1 to the present T is less than the total cultivation period Pt, the plant cultivation apparatus continues to irradiate the plants grown from the seeds with the light.

On the contrary, if the period of time that has elapsed from the first point in time T1 to the present T is the total cultivation period Pt or more, the plant cultivation apparatus stops water supply and light irradiation (S301). As water supply is stopped, the plants grown from the seeds may cease to grow.

Then, the plants grown from the seeds are harvested in order to prevent the plants from growing bigger than planned due to water remaining in the plant cultivation apparatus (S302). Harvesting the plants may mean completely isolating the plants from water. To this end, the plant cultivation apparatus may transfer the harvested plants into a separate harvesting device separated from the water supply unit. Then, a user can easily acquire the harvested plants from the harvesting device.

According to the embodiment of the present disclosure, a plant having high antioxidant capacity and total phenolic content meeting predetermined criteria can be cultivated without user involvement in the cultivation process. In this way, even a user without knowledge of plant cultivation can easily cultivate and harvest plants having high antioxidant capacity and high total phenolic content.

In addition, according to the embodiment of the present disclosure, it is possible to produce highly marketable vegetables (especially, soybean sprouts and mung bean sprouts) that have high antioxidant capacity and total phenolic content while reducing virescence to a minimum. In particular, soybean sprouts having a green color due to virescence are inferior in taste and thus have poor marketability. However, according to the embodiment of the present disclosure, as virescence can be prevented or at least reduced to a minimum, highly marketable and highly functional vegetables can be produced.

Hereinabove, the plant cultivation apparatus and the plant cultivation method for cultivating plants having high antioxidant capacity and total phenolic content have been described. Next, advantageous effects of the plant cultivation apparatus and the plant cultivation method according to the embodiments of the present disclosure, that is, high total phenolic content and antioxidant capacity of the plants, will be described in more detail with reference to experimental data.

### 1. Influence of light irradiation on total phenolic content of soybean sprouts

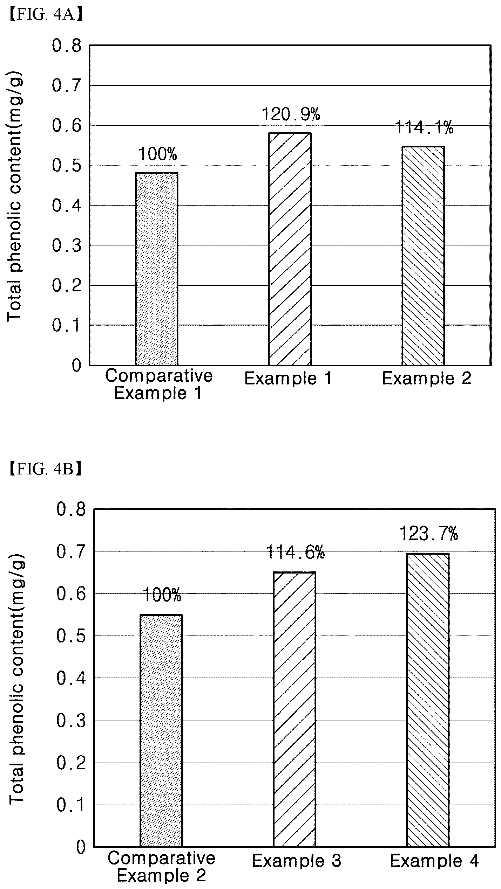

FIG. 4A and FIG. 4B are graphs comparing the total phenolic contents of soybean sprouts cultivated by plant cultivation methods according to Examples and Comparative Examples.

Soybean sprout samples of Examples 1 and 3 were irradiated with light having a wavelength of about 295 nm during cultivation, and soybean sprout samples of Examples 2 and 4 were irradiated with light having a wavelength of about 275 nm during cultivation. Here, all the soybean sprout samples of Examples 1 to 4 were irradiated with light having the respective wavelengths for 24 hours immediately before harvest.

Soybean sprout samples of Comparative Examples 1 and 2 were not irradiated with light having a wavelength of about 200 nm to about 400 nm during cultivation.

Except for the absence of exposure to light having a wavelength of about 200 nm to about 400 nm, the soybean sprout samples of Comparative Examples 1 and 2 were cultivated in the same environment as in Examples 1 to 4. All the soybean sprout samples of Examples and Comparative Examples were cultivated for about 96 hours in a plant cultivation apparatus with external light blocked out.

Referring to FIG. 4A, it was observed that the total phenolic content of the soybean sprout samples of Examples 1 and 2 was significantly higher than that of Comparative Example 1.

Specifically, the total phenolic content of the soybean sprout sample of Example 1 was about 20.9% higher than that of Comparative Example 1, and the total phenolic content of the soybean sprout sample of Example 2 was about 14.1% higher than that of Comparative Example 1.

Referring to FIG. 4B, it was observed that the total phenolic content of the soybean sprout samples of Examples 3 and 4 was significantly higher than that of Comparative Example 2.

Specifically, the total phenolic content of the soybean sprout sample of Example 3 was about 14.6% higher than that of Comparative Example 2, and the total phenolic content of the soybean sprout sample of Example 3 was about 23.71% higher than that of Comparative Example 2.

Therefore, as a result of comparing Examples 1 to 4 with Comparative Examples 1 and 2, it was confirmed that irradiation with light having a wavelength of about 200 nm to about 400 nm can have a significant influence on the total phenolic content of soybean sprouts.

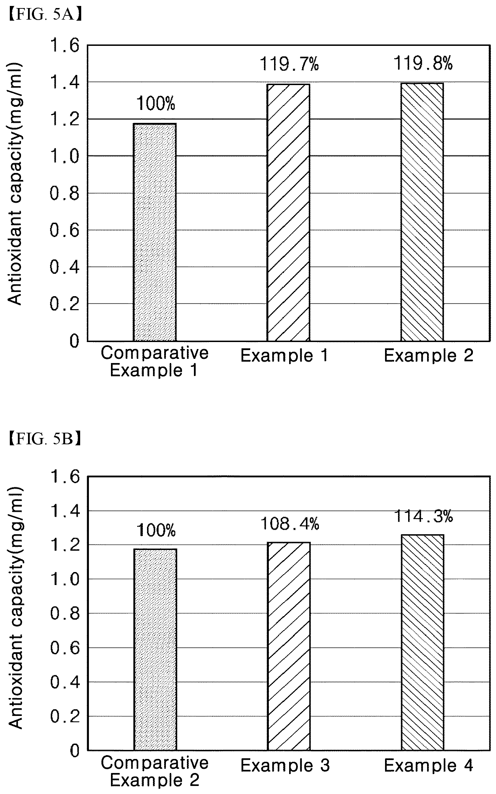

Next, in order to determine whether a difference in total phenolic content manifests as a difference in actual antioxidant capacity, an antioxidant capacity measurement test as shown in FIG. 5A and FIG. 5B was conducted.

### 2. Influence of light irradiation on antioxidant capacity of soybean sprouts

FIG. 5A and FIG. 5B are graphs showing results of measurement of the antioxidant capacity of the soybean sprout samples of Examples 1 to 4 and Comparative Examples 1 and 2.

Antioxidant capacity was determined by measuring free oxygen radical scavenging ability of all antioxidants contained in the soybean sprout samples of Examples and Comparative Examples.

Specifically, antioxidant capacity was measured by ABTS assay using ABTS (2,2'-azino-bis(3-ethylbenzothiazoline-6-sulphonic acid). Blue ABTS radical cations are reduced to colorless neutral states upon meeting antioxidants. With increasing amount of antioxidants, more ABTS radical cations are reduced to colorless neutral states and the degree of discoloration becomes severer. In this test, after reacting extracts of the soybean sprout samples of Examples and Comparative Examples with an ABTS solution, color change of the ABTS solution was spectrophotometrically analyzed, thereby measuring the antioxidant capacity of soybean sprout samples with reference to trolox as an antioxidant standard.

Referring to FIG. 5A, the antioxidant capacity of the soybean sprout samples of Examples 1 and 2 was significantly higher than that of Comparative Example 1.

Specifically, the antioxidant capacity of the soybean sprout sample of Example 1 was about 19.7% higher than that of Comparative Example 1, and the antioxidant capacity of the soybean sprout sample of Example 2 was about 19.8% higher than that of Comparative Example 1.

Referring to FIG. 5B, the antioxidant capacity of the soybean sprout samples of Examples 3 and 4 was significantly higher than that of Comparative Example 2.

Specifically, the antioxidant capacity of the soybean sprout sample of Example 3 was about 8.4% higher than that of Comparative Example 2, and the total phenolic content of the soybean sprout sample of Example 3 was about 14.3% higher than that of Comparative Example 2.

Therefore, it was confirmed that there is a significant difference in total phenolic content of soybean sprouts between with and without irradiation with light having a wavelength of about 200 nm to about 400 nm, which leads to a significant difference in antioxidant capacity.

### 3. Influence of light irradiation on dry weight of soybean sprouts

Next, in order to determine whether irradiation with light having a wavelength of about 200 nm to about 400 nm stunts growth of soybean sprouts, the dry weight of the soybean sprout samples of Comparative Examples and Examples was measured.

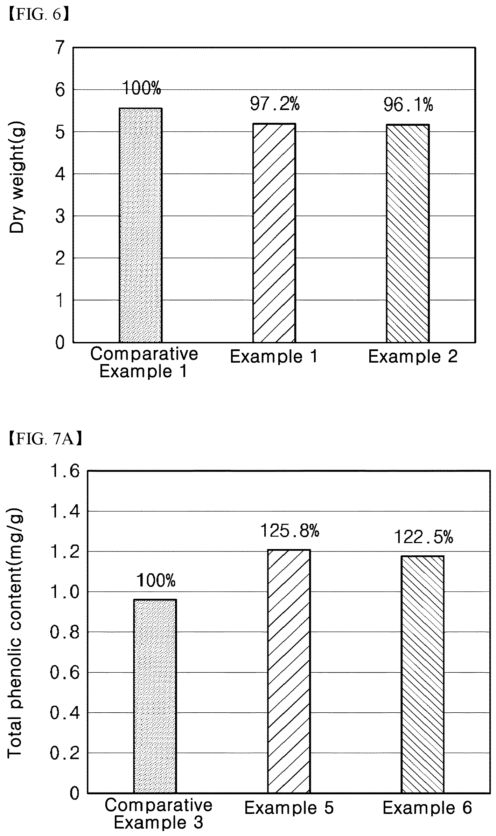

FIG. 6 is a graph showing the dry weight of the soybean sprout samples of Comparative Examples and Examples.

Referring to FIG. 6, it was observed that, when the dry weight of the soybean sprout sample of Comparative Example 1 was converted into 100%, the dry weight of the soybean sprout sample of Example 1 was 97.2% and the dry weight of the soybean sprout sample of Example 2 was 96.1%.

Thus, it was confirmed that the difference in dry weight between the soybean sprout samples of Examples 1 and 2 and the soybean sprout sample of Comparative Example 1 was less than 4% and, considering measurement errors, the dry weight of the soybean sprout samples of Examples 1 and 2 was substantially the same as that of Comparative Example 1. Therefore, it was confirmed that irradiation with light having a wavelength of about 200 nm to about 400 nm can increase the total phenolic content of soybean sprouts without sacrificing growth of the soybean sprouts.

### 4. Influence of light irradiation on total phenolic content of mung bean sprouts

Measurement of data shown in FIG. 7A, FIG. 7B, FIG. 8A, FIG. 8B, and FIG. 9 was conducted in the same manner as measurement of data shown FIG. 4A, FIG. 4B, FIG. 5A, FIG. 5B, and FIG. 6 except that mung bean seeds were used instead of soybean seeds.

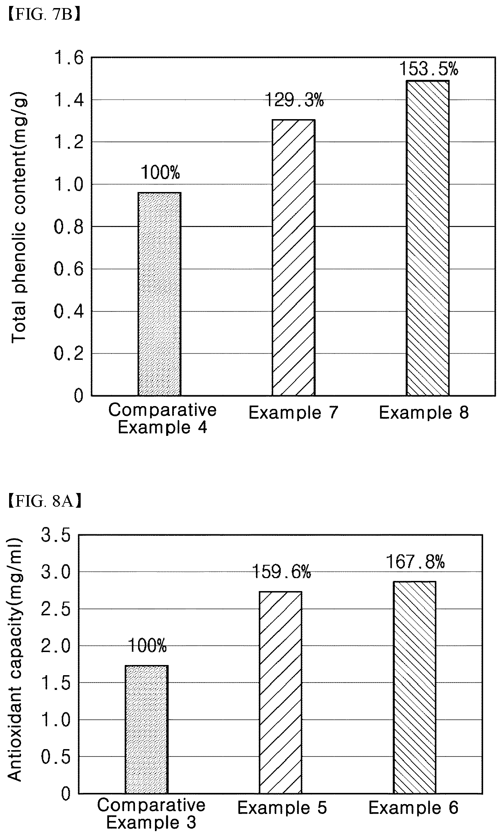

FIG. 7A and FIG. 7B are graphs comparing the total phenolic contents of mung bean sprouts cultivated by plant cultivation methods according to Examples and Comparative Examples.

Mung bean sprout samples of Examples 5 and 7 were irradiated with light having a wavelength of about 295 nm during cultivation, and mung bean sprout samples of Examples 6 and 8 were irradiated with light having a wavelength of about 275 nm during cultivation. Here, all the soybean sprout samples of Examples 1 to 4 were irradiated with light having the respective wavelengths for 24 hours immediately before harvest.

Mung bean sprout samples of Comparative Examples 1 and 2 were not irradiated with light having a wavelength of about 200 nm to about 400 nm during cultivation.

Except for the absence of exposure to light having a wavelength of about 200 nm to about 400 nm, the mung bean sprout samples of Comparative Examples 3 and 4 were cultivated in the same environment as in Examples 5 to 8. All the mung bean sprout samples of Examples and Comparative Examples were cultivated for about 96 hours in a plant cultivation apparatus with external light blocked out.

Referring to FIG. 7A, it was observed that the total phenolic content of the mung bean sprout samples of Examples 5 and 6 was significantly higher than that of Comparative Example 3.

Specifically, the total phenolic content of the mung bean sprout sample of Example 5 was about 25.8% higher than that of Comparative Example 3, and the total phenolic content of the mung bean sprout sample of Example 6 was about 22.5% higher than that of Comparative Example 3.

Referring to FIG. 7B, it was observed that the total phenolic content of the mung bean sprout samples of Examples 7 and 8 was significantly higher than that of Comparative Example 4.

Specifically, the total phenolic content of the mung bean sprout sample of Example 7 was about 29.3% higher than that of Comparative Example 4, and the total phenolic content of the mung bean sprout sample of Example 3 was about 53.5% higher than that of Comparative Example 4.

Therefore, as a result of comparing Examples 5 to 8 with Comparative Examples 3 and 4, it was confirmed that irradiation with light having a wavelength of about 200 nm to about 400 nm can have a significant influence on the total phenolic content of mung bean sprouts.

### 5. Influence of light irradiation on antioxidant capacity of mung bean sprouts

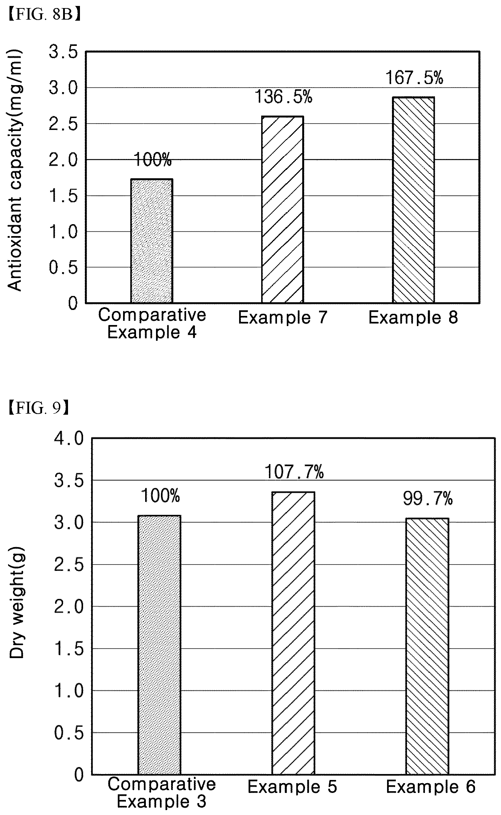

Next, in order to determine whether a difference in total phenolic content manifests as a difference in actual antioxidant capacity, an antioxidant capacity measurement test as shown in FIG. 8A and FIG. 8B was conducted.

FIG. 8A and FIG. 8B are graphs showing results of measurement of the antioxidant capacity of the mung bean sprout samples of Examples 5 to 8 and Comparative Examples 3 and 4.

Referring to FIG. 8A, it was confirmed that the antioxidant capacity of the mung bean sprout samples of Examples 5 and 6 was significantly higher than that of Comparative Example 3.

Specifically, the antioxidant capacity of the mung bean sprout sample of Example 5 was about 59.6% higher than that of Comparative Example 3, and the antioxidant capacity of the mung bean sprout sample of Example 6 was about 67.8% higher than that of Comparative Example 3.

Referring to FIG. 8B, it was confirmed that the antioxidant capacity of the mung bean sprout samples of Examples 7 and 8 was significantly higher than that of Comparative Example 4.

Specifically, the antioxidant capacity of the mung bean sprout sample of Example 3 was about 36.5% higher than that of Comparative Example 4, and the antioxidant capacity of the mung bean sprout sample of Example 3 was about 67.5% higher than that of Comparative Example 4.

Therefore, it was confirmed that there is a significant difference in total phenolic content of mung bean sprouts between with and without irradiation with light having a wavelength of about 200 nm to about 400 nm, which leads to a significant difference in antioxidant capacity.

### 6. Influence of light irradiation on dry weight of mung bean sprouts

Next, in order to determine whether irradiation with light having a wavelength of about 200 nm to about 400 nm stunts growth of mung bean sprouts, the dry weight of the mung bean sprout samples of Comparative Examples and Examples was measured.

FIG. 9 is a graph showing the dry weight of the mung bean sprout samples of Comparative Examples and Examples.

Referring to FIG. 9, it was confirmed that, when the dry weight of the mung bean sprout sample of Comparative Example 1 was converted into 100%, the dry weight of the mung bean sprout sample of Example 1 was 107.7% and the dry weight of the mung bean sprout sample of Example 2 was 99.7%.

Thus, it can be seen that irradiation with light having a wavelength of about 200 nm to about 400 nm promoted growth of mung bean sprouts (Example 5) or did not affect growth of mung bean sprouts (Example 6). Therefore, it can be seen that irradiation with light having a wavelength of about 200 nm to about 400 nm does not stunt growth of mung bean sprouts.

### 7. Comparison of color of soybean sprouts and mung bean sprouts between with and without light irradiation

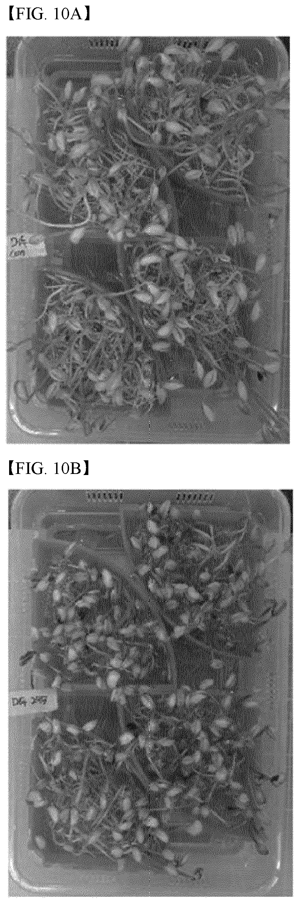

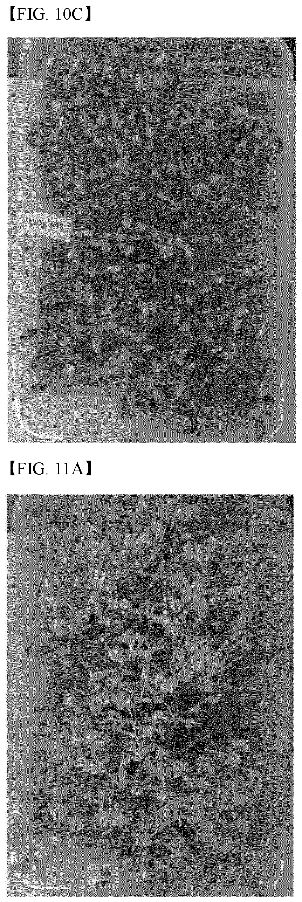

FIG. 10A to FIG. 10C are images of plants cultivated in Examples and Comparative Examples. FIG. 11A to FIG. 11C are images of plants cultivated in Examples and Comparative Examples.

FIG. 10A to FIG. 10C compare color between soybean sprout samples cultivated from soybean seeds by methods according to Examples and Comparative Examples and FIG. 11A to FIG. 11C compare color between mung bean sprout samples cultivated from mung bean seeds by methods according to Examples and Comparative Examples.

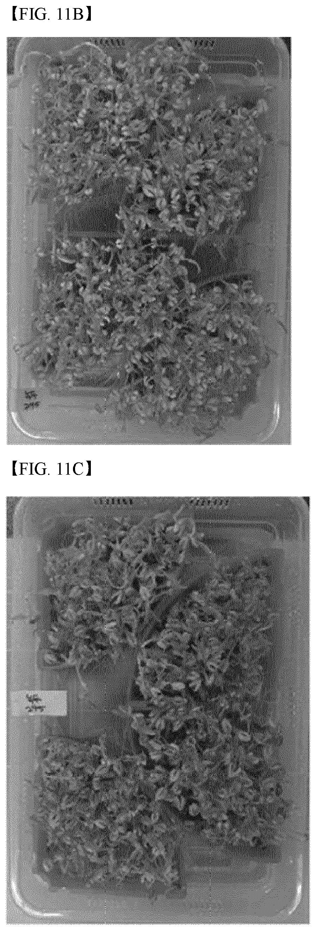

FIG. 10A and FIG. 11A are images of a soybean sprout sample and a mung bean sprout sample cultivated under dark conditions of irradiation with light having a wavelength of about 200 nm to about 400 nm according to Comparative Examples, respectively. FIG. 10B and FIG. 11B are images of a soybean sprout sample and a mung bean sprout sample cultivated in the same manner as in Comparative Examples except for irradiation with light having a wavelength of about 295 nm for 24 hours immediately before harvest, respectively. FIG. 10C and FIG. 11C are images of a soybean sprout sample and a mung bean sprout sample cultivated in the same manner as in Comparative Examples except for irradiation with light having a wavelength of about 275 nm for 24 hours immediately before harvest, respectively.

In the case of soybean sprouts and mung bean sprouts, products with yellow color are generally highly marketable. Thus, soybean sprouts or mung bean sprouts which have turned green despite having high total phenolic content can have low marketability. Thus, this experiment was conducted to determine whether irradiation with light having a wavelength of about 200 nm to about 400 nm causes discoloration of soybean sprouts and mung bean sprouts.

As shown in FIG. 10A to FIG. 11C, irradiation with light having a wavelength of about 200 nm to about 400 nm did not cause the soybean sprout samples and the mung bean sprout samples to have exhibited poor growth or to have turned green. Therefore, it was confirmed that the plant cultivation apparatus or the plant cultivation method according to the embodiments of the present disclosure can increase the antioxidant capacity and total phenolic content of soybean sprouts and mung bean sprouts without reduction in marketability due to changes in appearance, particularly, discoloration from yellow to green.

### 8. Comparison of color of soybean sprouts depending upon wavelength of irradiation light

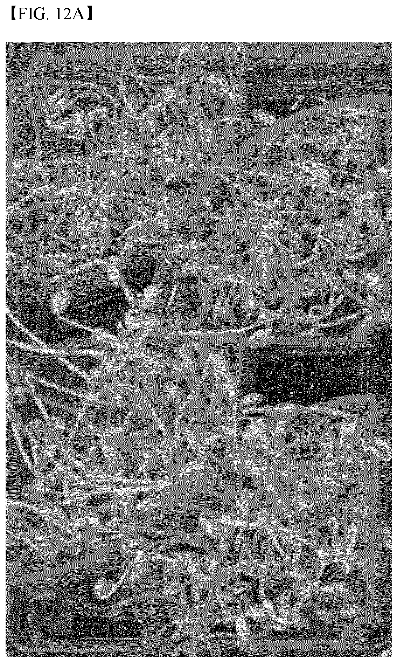

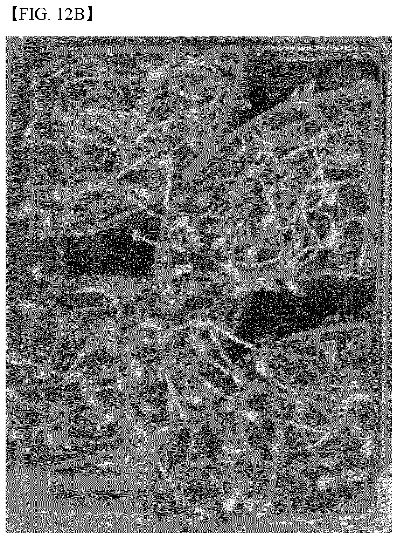

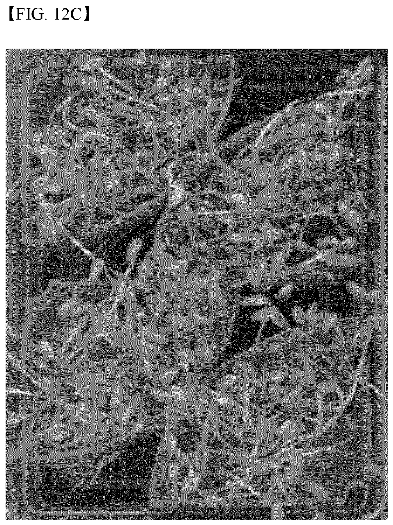

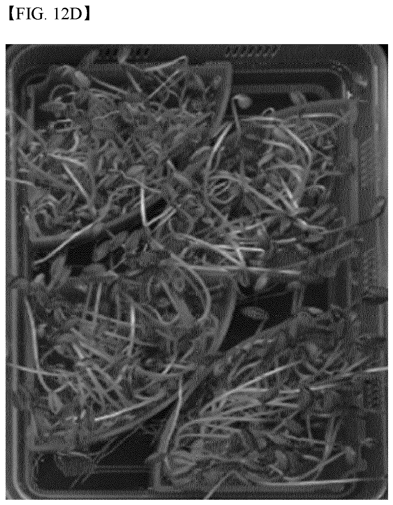

FIG. 12A to FIG. 12D show changes in color of soybean sprouts depending upon the wavelength of light to which the soybean sprouts are exposed. FIG. 12A to FIG. 12C are images of a control group and experimental groups 1 to 3, respectively.

In this experiment, the control group was a soybean sprout sample obtained by growing soybean seeds under dark conditions for 3 days, followed by maintaining the dark conditions for 24 hours on day 4 of cultivation, and experimental groups 1 to 3 were soybean sprout samples obtained by growing soybean seeds under dark conditions for 3 days and irradiating the seeds with light having wavelengths of 295 nm, 315 nm, and 365 nm at an irradiance of 10 µW/cm² for 24 hours on day 4 of cultivation, respectively.

Referring to FIG. 12A to FIG. 12D, it was confirmed that change in wavelength of irradiation light caused a difference in degree of discoloration between soybean sprout samples cultivated at the same irradiance under the same conditions. In particular, the soybean sprout sample irradiated with light having a wavelength of 365 nm exhibited severe virescence.

Soybean sprouts with green color are considered to be unmarketable.

### 9. Comparison of phytochemical content of soybean sprouts depending upon wavelength and irradiance of irradiation light and duration of irradiation

Table 1 shows results of determining the total phenolic content and antioxidant capacity of soybean sprouts irradiated with light having wavelengths of 295 nm and 315 nm (a wavelength of 365 nm was excluded since soybean sprouts irradiated therewith are considered to be unmarketable). In Table 1, the control group is a soybean sprout sample obtained by growing soybean seeds under dark conditions for 3 days, followed by maintaining the dark conditions for 24 hours on day 4 of cultivation, and experimental groups 1 to 2 are soybean sprout samples obtained by growing soybean seeds under dark conditions for 3 days and irradiating the seeds with light having a wavelength of 295 nm and 315 nm at an irradiance of 10 µW/cm² for 24 hours on day 4 of cultivation, respectively. The experiment had 5 replicates for each of the control group and experimental groups 1 and 2, and 20 soybean seeds were used for each replicate.

**Table 1**

| | Number | Dry weight (g) | Total phenolic content (mg/g) | Antioxidant capacity (mM/g) |
|---|---|---|---|---|
| Control | 1 | 1.19 | 4.84 | 12.04 |
| | 2 | 1.07 | 4.89 | 12.60 |
| | 3 | 1.04 | 5.13 | 13.49 |
| | 4 | 1.11 | 5.07 | 12.09 |
| | 5 | 1.05 | 4.73 | 10.86 |
| Experimental group 1 | 1 | 1.08 | 5.47 | 14.00 |
| | 2 | 1.06 | 5.56 | 14.60 |
| | 3 | 1.18 | 5.40 | 14.07 |
| | 4 | 1.02 | 5.64 | 15.11 |
| | 5 | 1.12 | 4.22 | 12.14 |
| Experimental group 2 | 1 | 1.02 | 5.05 | 14.14 |
| | 2 | 1.13 | 4.80 | 13.78 |
| | 3 | 1.07 | 4.54 | 11.15 |
| | 4 | 1.07 | 4.48 | 12.31 |
| | 5 | 1.08 | 4.95 | 13.34 |

Tables 2 and 3 are summaries of the results shown in Table 1. Table 2 shows the average values of the dry weight, total phenolic content, and antioxidant capacity of the control group and experimental groups 1 and 2 shown in Table 1, and Table 3 shows the rate of change of the result values of experimental groups 1 and 2 shown in Table 2, as compared with the result values of the control group.

**Table 2**

| | Soybean | Dry weight (g) | Total phenolic content (mg/g) | Antioxidant capacity (mM/g) |
|---|---|---|---|---|
| Average | Control | 1.09 | 4.93 | 12.22 |
| | Experimental group 1 | 1.09 | 5.26 | 13.98 |
| | Experimental group 2 | 1.07 | 4.77 | 12.94 |

**Table 3**

| | Soybean | Dry weight (g) | Total phenolic content (mg/g) | Antioxidant capacity (mM/g) |
|---|---|---|---|---|
| Rate of change | Control | 0.00% | 0.00% | 0.00% |
| | Experimental | 0.00% | 6.70% | 14.49% |
| | group 1 | | | |
| | Experimental group 2 | -1.65% | -3.34% | 5.97% |

Referring to Tables 2 and 3, although the dry weight of experimental group 2 subjected to irradiation with 315 nm light was smaller than that of experimental group 1 subjected to irradiation with 295 nm light, the difference therebetween was considered to be insignificant.

The total phenolic content of experimental group 1 subjected to irradiation with 295 nm light increased by about 6.70%, as compared with that of the control group, and the total phenolic content of experimental group 2 subjected to irradiation with 315 nm light decreased by about 3.34%, as compared with that of the control group. Thus, there was a slight but nonnegligible difference in total phenolic content between experimental groups 1 and 2.

The antioxidant capacity of experimental group 1 subjected to irradiation with 295 nm light increased by about 14.49%, as compared with that of the control group, and the antioxidant capacity of experimental group 2 subjected to irradiation with 315 nm light increased by about 5.97%, as compared with that of the control group.

Therefore, it was confirmed that irradiation with 295 nm light promotes production of phenolic compounds, which are phytochemicals, more than irradiation with 315 nm light does. In addition, it was confirmed that irradiation with 295 nm light significantly increases the antioxidant capacity of the plants, as compared with irradiation with 315 nm light. Particularly, the antioxidant capacity of experimental group 1 subjected to irradiation with 295 nm light increased by as much as about 14.49%, as compared with that of the control group.

### 10. Comparison of phytochemical content of soybean sprouts depending upon duration of irradiation

Through the above experiment, it was confirmed that irradiation with 295 nm light can increase the total phenolic content and antioxidant capacity of soybean sprouts. Next, an experiment was conducted to determine influence of duration of irradiation with 295 nm light on the total phenolic content and antioxidant capacity of soybean sprouts.

Table 4 shows the results of determining the total phenolic content and antioxidant capacity of soybean sprouts subjected to irradiation with 295 nm light. The control group was a soybean sprout sample obtained by growing soybean seeds under dark conditions for 3 days, followed by maintaining the dark conditions for 24 hours on day 4 of cultivation, and experimental groups 1 to 5 were soybean sprout samples obtained by growing soybean seeds under dark conditions for 3 days and applying light irradiation for 1 hour, 3 hours, 6 hours, 12 hours, and 24 hours immediately before harvest, respectively. Here, experimental groups 1 to 5 were subjected to irradiation at a total irradiance of 10 µW/cm².

The experiment had 5 replicates for each of the control group and experimental groups 1 to 5 and 20 soybean seeds were used for each replicate. In Table 4, day 0 means immediately after 4 days of treatment, that is, immediately after light irradiation treatment and day 3 means day 3 of storage in a refrigerator at 1°C to 4°C, similar to general preservation conditions for soybean sprouts, after 4 days of treatment. When the content of each phytochemical was impossible to determine on day 0, a corresponding sample was quenched in a freezer at -80°C to be in essentially the same condition as immediately after 4 days of treatment.

**Table 4**

| | | Day 0 | | | Day 3 | | |
|---|---|---|---|---|---|---|---|
| | Number | Dry weight (g) | Total phenolic content (mg/g) | Antioxidant capacity (mM/g) | Dry weight (g) | Total phenolic content (mg/g) | Antioxidant capacity (mM/g) |
| Control | 1 | 2.12 | 5.45 | 13.21 | 2.08 | 3.38 | 9.94 |
| | 2 | 1.97 | 4.67 | 12.88 | 2.58 | 4.00 | 12.82 |
| | 3 | 2.27 | 4.53 | 12.71 | 2.05 | 5.45 | 12.51 |
| | 4 | 2.18 | 5.00 | 13.37 | 2.18 | 5.45 | 12.79 |
| | 5 | 2.18 | 5.18 | 14.56 | 2.09 | 4.87 | 13.12 |
| Experimental group 1 | 1 | 2.12 | 4.03 | 9.91 | 2.18 | 4.67 | 13.55 |
| | 2 | 2.03 | 4.06 | 14.71 | 2.22 | 4.50 | 11.23 |
| | 3 | 2.32 | 5.65 | 14.52 | 2.13 | 5.44 | 13.46 |
| | 4 | 2.16 | 5.88 | 12.05 | 2.19 | 5.32 | 12.16 |
| | 5 | 2.08 | 5.93 | 14.53 | 2.14 | 4.86 | 12.20 |
| Experimental group 2 | 1 | 2.12 | 4.68 | 14.08 | 2.10 | 4.82 | 13.01 |
| | 2 | 2.21 | 5.21 | 14.48 | 2.11 | 4.62 | 13.61 |
| | 3 | 2.05 | 5.84 | 14.11 | 2.04 | 4.59 | 12.69 |
| | 4 | 2.22 | 5.58 | 11.49 | 2.25 | 4.71 | 12.84 |
| | 5 | 2.13 | 5.15 | 15.45 | 2.16 | 4.55 | 13.54 |
| Experimental group 3 | 1 | 2.25 | 4.72 | 12.45 | 2.11 | 4.77 | 12.60 |
| | 2 | 2.23 | 4.68 | 13.50 | 1.89 | 4.32 | 13.51 |
| | 3 | 2.04 | 5.93 | 14.95 | 2.11 | 5.60 | 14.76 |
| | 4 | 2.26 | 6.08 | 16.02 | 2.11 | 4.17 | 14.35 |
| | 5 | 1.96 | 5.66 | 14.61 | 2.12 | 5.01 | 13.85 |
| Experimental group 4 | 1 | 2.01 | 4.26 | 11.85 | 2.27 | 4.23 | 11.22 |
| | 2 | 2.04 | 5.09 | 12.91 | 2.09 | 4.94 | 15.01 |
| | 3 | 1.99 | 5.13 | 13.73 | 2.16 | 5.83 | 14.29 |
| | 4 | 2.18 | 5.53 | 14.88 | 2.03 | 5.10 | 13.60 |
| | 5 | 2.09 | 5.39 | 14.41 | 2.11 | 3.54 | 13.00 |
| Experimental group 5 | 1 | 2.10 | 6.01 | 14.05 | 2.13 | 4.88 | 12.97 |
| | 2 | 2.16 | 5.50 | 15.35 | 2.09 | 5.29 | 14.27 |
| | 3 | 2.15 | 6.15 | 14.65 | 2.16 | 5.22 | 14.73 |
| | 4 | 2.05 | 6.26 | 15.79 | 2.17 | 6.11 | 16.73 |
| | 5 | 2.33 | 6.22 | 16.57 | 2.19 | 5.75 | 15.26 |

Tables 5 and 6 are summaries of the results shown in Table 4. Table 5 shows the average values of the dry weight, total phenolic content, and antioxidant capacity of the control group and experimental groups 1 to 5 shown in Table 4, and Table 6 shows the rate of change of the result values of experimental groups 1 to 5 shown in Table 4, as compared with the result values of the control group.

**Table 5**

| Soybean | | | Dry weight (g) | Total phenolic content(mg/g) | Antioxidant capacity (mM/g) |
|---|---|---|---|---|---|
| Average | Day 0 | Control | 2.14 | 4.96 | 13.35 |
| | | Experimental group 1 | 2.14 | 5.11 | 13.14 |
| | | Experimental group2 | 2.15 | 5.29 | 13.92 |
| | | Experimental group3 | 2.15 | 5.42 | 14.31 |
| | | Experimental group4 | 2.06 | 5.08 | 13.55 |
| | | Experimental group5 | 2.16 | 6.03 | 15.28 |
| | Day 3 | Control | 2.20 | 4.63 | 12.23 |
| | | Experimental group 1 | 2.17 | 4.96 | 12.52 |
| | | Experimental group2 | 2.13 | 4.66 | 13.14 |
| | | Experimental group3 | 2.07 | 4.77 | 13.81 |
| | | Experimental group4 | 2.13 | 4.73 | 13.43 |
| | | Experimental group5 | 2.15 | 5.45 | 14.79 |

**Table 6**

| Soybean | | | Dry weight (g) | Total phenolic content(mg/g) | Antioxidant capacity (mM/g) |
|---|---|---|---|---|---|
| Rate of change | Day 0 | Control | 0.00% | 0.00% | 0.00% |
| | | Experimental group 1 | -0.09% | 2.94% | -1.54% |
| | | Experimental group2 | 0.09% | 6.65% | 4.30% |
| | | Experimental group3 | 0.19% | 9.11% | 7.18% |
| | | Experimental group4 | -3.82% | 2.38% | 1.54% |
| | | Experimental group5 | 0.65% | 21.45% | 14.49% |
| | Day 3 | Control | 0.00% | 0.00% | 0.00% |
| | | Experimental group 1 | -1.09% | 7.14% | 2.35% |
| | | Experimental group2 | -2.91% | 0.64% | 7.38% |
| | | Experimental group3 | -5.83% | 3.18% | 12.92% |
| | | Experimental group4 | -2.91% | 2.16% | 9.74% |
| | | Experimental group5 | -2.19% | 17.79% | 20.90% |

Referring to Tables 5 and 6, although the dry weight of experimental groups 1 to 5 subjected to light irradiation generally decreased on both day 1 and day 3, as compared with that of the control group, the degree of decrease was considered to be insignificant.

Although the total phenolic content on day 1 and day 3 generally had a tendency of increasing with increasing duration of irradiation, increase in duration of irradiation did not seem to be directly linked with increase in total phenolic content since there were some experimental groups, the total phenolic content of which decreased even with increasing duration of irradiation.

However, experimental group 5, that is, a sample subjected to irradiation for 24 hours, had considerably high total phenolic content, as compared with the other experimental groups. On day 0, the highest rate of change in total phenolic content among all but experimental group 5, was just 9.11%, whereas the rate of change in total phenolic content of experimental group 5 was as much as 21.45%. On day 3, the highest rate of change in total phenolic content among all but experimental group 5, was just 7.14%, whereas the rate of change in total phenolic content of experimental group 5 was as much as 17.79%.

Although the antioxidant capacity on day 1 and day 3 generally had a tendency of increasing with increasing duration of irradiation, increase in duration of irradiation did not seem to be directly linked with increase in total phenolic content since there were some experimental groups, the antioxidant capacity of which decreased even with increasing duration of irradiation.

However, experimental group 5, that is, the sample subjected to irradiation for 24 hours, had considerably high antioxidant capacity, as compared with the other experimental groups. On day 0, the highest rate of change in antioxidant capacity among all but experimental group 5, was just 7.18%, whereas the rate of change in antioxidant capacity of experimental group 5 was as much as 14.49%. On day 3, the highest rate of change in antioxidant capacity among all but experimental group 5, was just 12.92%, whereas the rate of change in antioxidant capacity of experimental group 5 was as much as 20.90%.

Through this experiment, it was confirmed that, for a given irradiance, irradiation with light having a specific wavelength, for example, 195 nm, for 24 hours can significantly increase the phytochemical content of vegetables.

Although some embodiments have been described herein, it should be understood by those skilled in the art that these embodiments are given by way of illustration only and the present disclosure is not limited thereto. In addition, it should be understood that various modifications, variations, and alterations can be made by those skilled in the art without departing from the spirit and scope of the present disclosure.

Therefore, the scope of the present disclosure should be limited only by the accompanying claims and equivalents thereto.

## Claims

1. A plant cultivation apparatus for increasing the content of phytochemicals in a plant by applying light to the plant, the plant cultivation apparatus being adapted to apply the light to the plant immediately before harvest of the plant, wherein the light has a wavelength of about 200 nm to about 400 nm and the plant is irradiated with the light at an irradiance of about 1 µW/cm² to about 500 µW/cm² for about 1 hour to about 30 hours, whereby at least one of the total phenolic content and antioxidant capacity of the plant is increased.

2. The plant cultivation apparatus according to claim 1, wherein the plant cultivation apparatus supplies water to seeds of the plant under dark conditions for a first period of time and irradiates the plants grown from the seeds with the light for a second period of time immediately before harvest.

3. The plant cultivation apparatus according to claim 2, wherein the second period of time is shorter than the first period of time.

4. The plant cultivation apparatus according to claim 2, wherein the light comprises light having a wavelength of about 270 nm to about 315 nm.

5. The plant cultivation apparatus according to claim 4, wherein the light comprises light having a wavelength of about 275 nm and light having a wavelength of about 295 nm.

6. The plant cultivation apparatus according to claim 2, wherein the second period of time ranges from about 6 hours to about 48 hours.

7. The plant cultivation apparatus according to claim 2, wherein the seeds are mung bean seeds or soybean seeds.

8. The plant cultivation apparatus according to claim 2, wherein the seeds and the plant are grown in an environment with visible light excluded therefrom.

9. The plant cultivation apparatus according to claim 2, comprising:
a light source emitting the light; and
a main body in which the plant is placed, the main body comprising a water supply device supplying water to the seeds and the plant.

10. The plant cultivation apparatus according to claim 2, wherein the antioxidant capacity is the sum of the antioxidant capacity of antioxidants comprising phenolic compounds, vitamins, and carotenoids.

11. The plant cultivation apparatus according to claim 10, wherein the phenolic compounds comprise flavonoids, phenolic acids, polyphenols, stilbenoids, hydrocinnamic acids, and coumaric acids.

12. A plant cultivation method for increasing the content of phytochemicals in a plant by applying light to the plant, the plant cultivation method comprising applying the light to the plant immediately before harvest of the plant, wherein the light has a wavelength of about 200 nm to about 400 nm and the plant is irradiated with the light at an irradiance of about 1 µW/cm² to about 500 µW/cm² for about 1 hour to about 30 hours, whereby at least one of the total phenolic content and antioxidant capacity of the plant is increased.

13. The plant cultivation method according to claim 12, further comprising:
germinating and growing the seeds of the plant;
irradiating the plants grown from the seeds with the light immediately before harvest of the plant; and
harvesting the plants grown from the seeds.

14. The plant cultivation method according to claim 13, wherein the light comprises light having a wavelength of about 270 nm to about 315 nm.

15. The plant cultivation method according to claim 13, wherein the plant is irradiated with the light for about 6 hours to about 48 hours.

16. The plant cultivation method according to claim 13, wherein the seeds are mung bean seeds or soybean seeds.

17. The plant cultivation method according to claim 16, wherein the seeds and the plant are grown in an environment with visible light excluded therefrom.

18. The plant cultivation method according to claim 13, wherein the plant is irradiated with the light at an irradiance of about 5 µW/cm² to about 15 µW/cm².

19. The plant cultivation method according to claim 12, wherein the antioxidant capacity is the antioxidant capacity of antioxidants comprising phenolic compounds, vitamins, and carotenoids.

20. The plant cultivation method according to claim 19, wherein the phenolic compounds comprise flavonoids, phenolic acids, polyphenols, stilbenoids, hydrocinnamic acids, and coumaric acids.
